# EUROPEAN PATENT APPLICATION

(11) **EP 4 039 585 A1**
(43) Date of publication of application: **10.08.2022**
(21) Application number: 22164914.8
(22) Date of filing: 01.11.2019
(51) Int. Cl.: B64C 11/48, B64C 11/00, B64C 11/46, B64C 27/20

(54) **ELECTRIC PROPELLER AND DUCTED FAN PROPULSION UNIT**

(30) Priority: 01.11.2018 US 201862753992 P
(62) Divisional of application: 19206742.9
(71) Applicant: Eviation Tech Ltd, 6092000 Kadima (IL)
(72) Inventor: BAR YOHAI, Omer, 3884000 Sdeh Itzhak (IL); TZIDON, Aziz, 6299412 Tel Aviv (IL); ZIVAN, Lior, 4284000 Yad Hanna (IL)
(74) Representative: Leihkauf, Steffen Falk

(57) **Abstract**

A method of controlling a propulsion system for a vehicle, comprising:

said propulsion system comprising at least one ducted fan (200, 210, 6200) mounted within a duct (6020, 700) and at least one propeller (100, 110, 6100) mounted on an outer perimeter of a respective duct (6020, 700) of the at least one ducted fan (200, 210, 6200), said method comprising controlling a first electric motor to drive said at least one propeller (100, 110, 6100);
and controlling a second electric motor to drive said at least one ducted fan (200, 210, 6200) independently of said first electric motor.

## Description

### CROSS-REFERENCE TO RELATED APPLICATIONS

This application claims the benefit of U.S. Provisional Patent Application No. 62/753,992, filed on November 1, 2018, which is hereby incorporated by reference.

### FIELD OF INVENTION

The invention relates to vehicles propulsion system and, in particular, to air vehicle electric propulsion systems.

### BACKGROUND OF THE INVENTION

Electrically powered model aircraft have been flown since the 1970s, with one unconfirmed report as early as 1957. They have since developed into small battery-powered unmanned aerial vehicles or drones, which, in the twenty-first century, have become widely used for many purposes.

The first manned free flight by an electrically powered airplane was not made until 1973.

All electric aircraft to date has been powered by electric motors driving thrust-generating propellers, thrust generating fans, or lift-generating rotors.

Electric propulsion for aircrafts may suggest the benefits of using a renewable energy source, zero emissions (of both carbohydrates and NOx), and quiet operation, but suffers from relative low energy density power source hence needs to be optimized to achieve adequate performance while keeping the main benefits.

There is a need to provide an electric propulsion system which is optimized for a wide range of flight speeds, with reduced noise and increased safety. The required propulsion system should further be easy to control and with minor influence on the air vehicle dynamics.

### SUMMARY OF INVENTION

A propulsion system for a vehicle comprising at least one propeller and at least one ducted fan, wherein each of the at least one propeller is mounted on a respective duct of the ducted fan outer perimeter and is adapted to be driven by a first electric motor, and the at least one ducted fan is mounted within the duct, and is adapted to be driven by a second electric motor.

In one embodiment, the first and the second motors are rotating around a common rotation axis.

In one embodiment, each of the motor's rotation speed and/or direction can be independently controlled/adjusted.

In one embodiment, the propeller and ducted fan are operated to achieve optimized or maximal efficiency as measured by thrust per input power at desired velocities and altitudes. In a further embodiment, the setting of the rotations speeds and blades pitch angles are determined according to a preloaded performance chart or based on on-going performance measurement of the propulsion system. In some embodiments, the system is further configured to identify, re-adjust and recover from a failure of a single thrust generator, wherein the thrust generator is one of fan or propeller.

In one embodiment, the rotation speeds and the blade pitch angles of the propeller and of the fan are controlled to achieve optimized of at least one of efficiency of the propulsion unit, reduction of the noise of the system and minimization of combined torque of the system on the vehicle by independently controlling the ducted fan RPM, the propeller RPM, and the propeller blades pitch angle.

In one embodiment, the maximal thrust of each of the propeller and the ducted fan is set so as to provide thrust above a predetermined fail-thrust threshold, wherein the threshold is determined to ensure successful takeoff at a predetermined combination of takeoff parameters, including total weight, runway altitude, nose wind.

In some embodiments, the ducted fan wake is directed to flow over the first motor and the second motor so as to dissipate the heat generated by the motors. In some embodiments, the system is further designed to optimize the noise emissions, and in particular a control system for generating destructive interference, wherein the rotations speeds and blades pitch angles are determined according to a preloaded performance chart or based on on-going performance measurement of the propulsion system.

In some embodiments, the operation parameters of the ducted fan are set to optimize the cooling effect.

In some embodiments, operational parameters of the propulsion unit are optimizable for low noise emission, and in particular the ducted fan and propeller are controlled and coordinated such that the generated sound waves from each are generating destructive interference.

In some embodiments, the duct geometry comprises converging and/or curved elements adapted to compensate for non-straight flow at high angle of attack or sideslip.

In some embodiments, the propellers and the fans are corotating or counterrotating. In some embodiments, the propellers and the fans are counterrotating and are coordinated so that the total generated torque is equal to or near zero.

In some embodiments, the propellers and the fans are counterrotating, and are coordinated so that the total angular momentum of the system is equal to or near zero, such that no gyroscopic precession moment is transferred from the propulsion unit to the air vehicle upon maneuvering

In some embodiments, the second motor is an out-runner type or in-runner type electric motor.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
Fig. 1 is a schematic 3D view illustration of the EPDF unit;
Fig. 2 is a schematic 3D view illustration of the EPDF unit with semi-transparent outer envelope;
Fig. 3 is a schematic illustration of the front view of an electric prop ducted fan (EPDF) unit, with a cross section A-A;
Fig. 4 is a schematic illustration the A-A cross section of the EPDF unit;
Fig. 5 is a schematic block diagram of a control system of an EPDF, such the EPDF of Fig. 4, according to embodiments of the present invention; and
Fig. 6 is a schematic cross section view of an optional design of an EPDF with a duct designed to consider airborne structure constrains, according to embodiments of the present invention.

It will be appreciated that, for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE INVENTION

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention. Examples that are presented below relate, in some cases, to propulsion of airborne vehicle, however it would apparent to those skilled in the art that analogous propulsion systems may eb used for propelling other moving/propelled vehicles, such as marine or land vehicles.

Propeller propelled airborne vehicle (AVs) are widely used in commercial flights due to the relatively high energetic efficiency. Yet, propulsion provided by propeller suffer from an inherent disadvantage of the very low aerodynamic usability of the inner circle of the propeller full disk, due to the relatively low tangential speed at this inner ring, which is mainly dictated by the upper limit of the tangential speed of the propeller tips of the blades.

Further design issue that needs to be addressed with propeller propulsion is the transverse moment acting on the AV body in response to the propulsion produced by the propeller. Common solutions provide a reversed propeller that substantially nulls the sum of the moments, yet powering a reversed propeller causes increased weight, increased mechanical complexity and lower MTBF and reduced efficiency of the aft propeller which is in the wake of the front one.

The disadvantages listed above, and some others may be solved by embodiments of the present invention that are described below

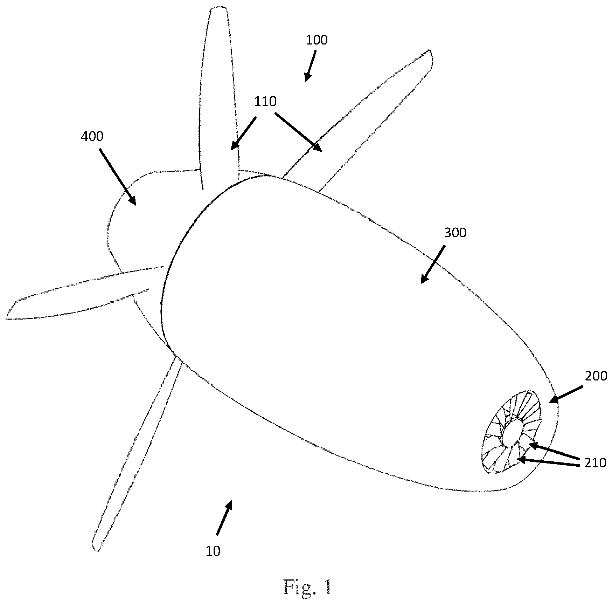

Reference is made now to **Fig. 1****,** which is a schematic 3D view illustration of an electric prop ducted fan (EPDF) unit 10. The EPDF unit comprises at least one propeller 100 and at least one fan 200, each driven by an electric motor, and their axes of rotation are aligned along a common central line and they are disposed within the same aerodynamically-shaped nacelle 300. In addition, the EPDF may include a spinner 400, designed to reduce the total drag of the unit. The propeller 100 is comprised of a hub and number of propeller blades 110, and the fan 200 is comprised of a hub and some number of fan blades 210.

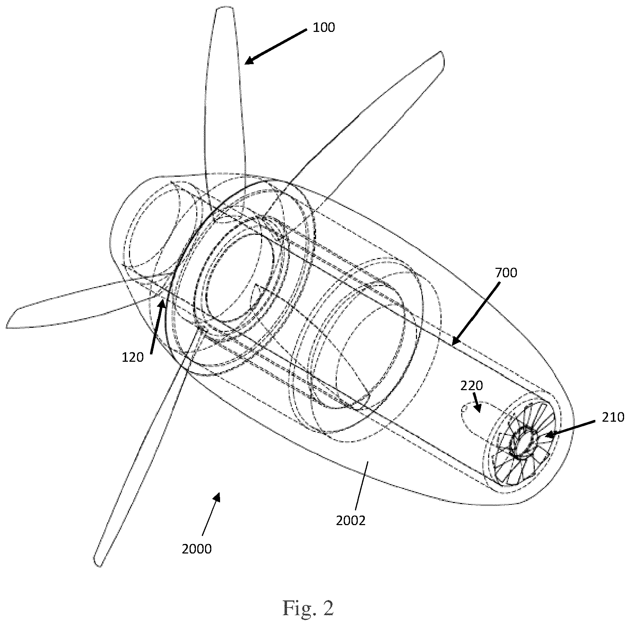

Reference is made now to **Fig. 2****,** which is a schematic 3D view illustration of the EPDF unit 2000 with semi-transparent outer envelope 2002. The EPDF unit 2000 internal assembly includes at least one fan assembly 200 comprising at least one fan-driving electric motor 220. The EPDF unit 2000 internal assembly further includes at least one propeller-driving electric motor 120, and a duct 700 with an inner diameter slightly greater than the fan blade's outer diameter. Duct 700 extends along the longitudinal dimension of EPDF unit 2000, wherein its forward-facing opening (with respect to the direction of flight of the AV) is free to allow flow of air through it, and its rear end accommodates fan 200. Blades 110 of propeller 100 may be disposed so as to leave the airway into duct 700 uninterrupted.

Each motor (120 and 220) can be independently controlled to produce a required power and provide required RPM and torque setting. In addition, the fan blades 210 of fan 200 and the propeller blades 110 of propeller 100 can each be of a fixed pitch type or a variable pitch type. The variable pitch type propeller and fan can be independently controlled in order to set the desired blades pitch angle of each.

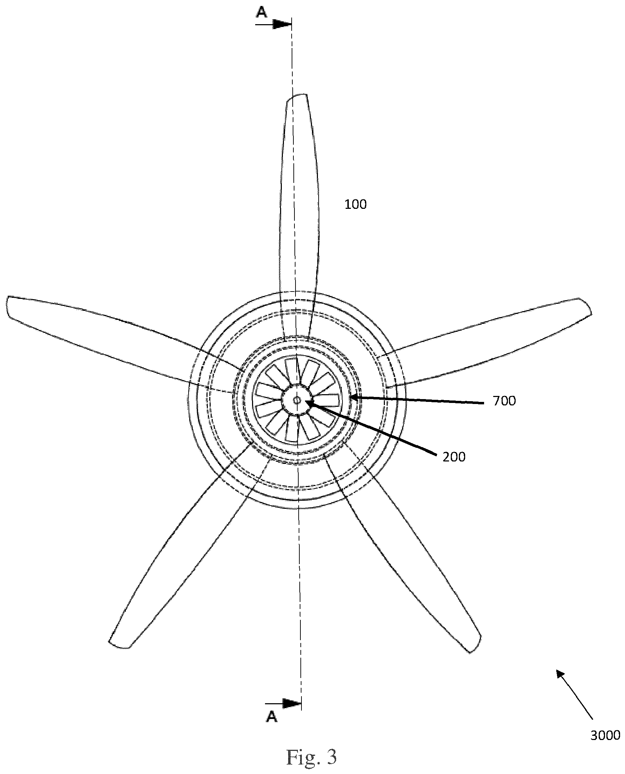

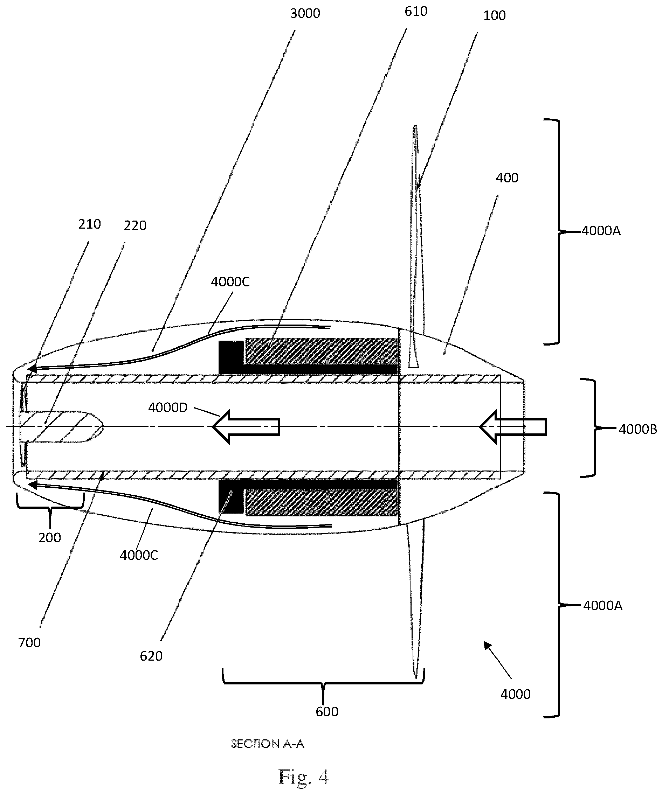

Reference is made now to **Fig. 3****,** which is a schematic illustration of the front view of an electric prop ducted fan (EPDF) unit 3000, with a cross section line A-A, and **Fig. 4****,** which is a schematic illustration 4000 of the A-A cross section line of Fig. 3. The internal assembly of EPDF unit 3000 includes the rotor 610 and the stator 620 of the propeller-driving electric motor 600, which is an out-runner motor type (outer rotor, inner stator) with its stator surrounding the inner duct 700. Fan 200, with its fan motor 220 and fan blades 210, may be disposed within duct 700, for example close to the rear outlet of duct 700.

The design parameters of the EPDF 4000 may include the outer diameter of blades 210 of fan 200 in conjunction with the inner diameter of duct 700, the length of the duct 700, the inner and outer diameters of the propeller blades 110, the geometry of nacelle 3000 and spinner 400 geometry, propeller blades 110 geometry, fan blades 210 geometry, and the propeller-driving-motor 600 and fan-driving-motor 500 characteristics.

Design requirement may comprise, for example, total thrust per energy optimization (whether by optimizing the actual thrust or by reducing the propulsion's unit drag); noise emissions optimization (minimized noise) per required thrust; thermal cooling optimization (minimal temperature per operation point and operation conditions); total torque optimization (reduction to zero, or as close to zero as possible); total angular momentum optimization (reduction to zero, or as close to zero as possible) to minimize gyroscopic effects; and redundancy. Further, design constrains may include, for example, minimal total required thrust, propulsion unit weight, and size of propulsion production unit.

The duct inner air flow, generated by the fan 200, may efficiently dissipate the heat generated by the fan driving motor 220 and by the propeller-driving electric motor stator 610 and rotor 620.

The design parameters of EPDF 4000 may be optimized to provide required / maximal combined thrust of propeller 110 and fan 210, at certain flight conditions or certain range of flight conditions, and/or to provide cooling effect of the propeller driving motor, and/or noise emissions, and/or enable redundancy. For example, the relative sizes of propeller 110 and fan 210 may be selected to enable the providing of substantially equal aerodynamic thrust by propeller 110 and fan 210, by selecting the diameter of duct 700, by selecting the outer diameter of propeller 110, by setting the torque/moment, the RPM and the pitch angle of the blades 110 of propeller 100 and the blades 210 of fan 200. The relative direction of rotation of propeller 110 with respect to fan 210 may also be selected, e.g., in reverse directions for minimizing the combined torque of the EPDF 3000. It should be noted that ducted propellers are relatively more efficient compared to non-ducted propellers with similar other parameters (such as outer diameter, RPM, torque, etc.). Further consideration may take into account the required amount of dissipation of heat from propeller motor 120 and fan motor 220. In another example, the RPM and/or blades pitch angles may be selected to minimize the overall noise of the EPDF 3000.

A further, in-flight optimization can be performed by the capability to independently set the RPM, power/torque and possibly blade pitch angles of each thrust generator, thus enabling the optimization to be valid throughout the entire flight envelope.

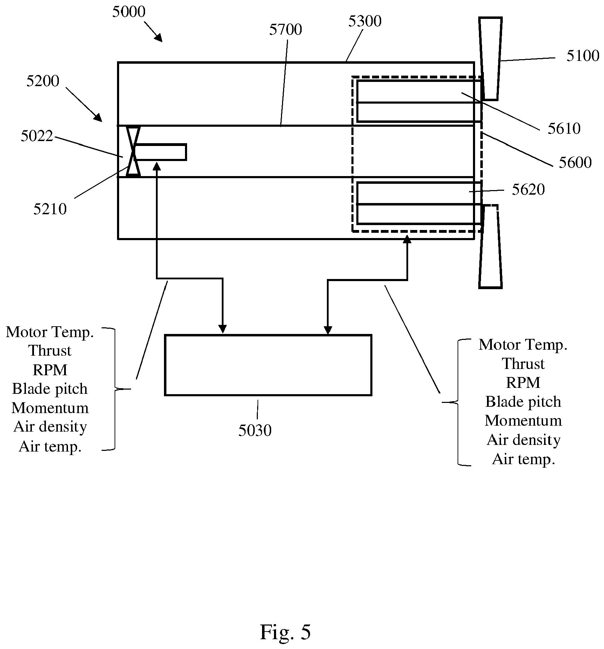

Reference is made now to **Fig. 5****,** which is a schematic block diagram of the control system 5000 of an EPDF, such as EPDF 3000 of Fig. 4, according to some embodiments of the present invention. Control system 5000 may comprise propeller sensors and control unit 5600, fan sensors and control unit 5200, central control unit 5030 and communication channels connecting units 5022 and 5600 to unit 5030. Each of units 5022 and 5600 may comprise one or more sensors adapted to sense and provide signal indicative of motor temperature, momentary thrust provided by the motor, RPM of the motor, blade pitch angle, momentum/torque provided by the motor, air speed, density and temperature of the air at the entry to and/or the exit from the respective propeller or fan. Each of units 5022 and 5600 may comprise one or more actuators/effectors adapted to control one or more of motor rotational speed, motor momentary torque, motor thrust, and blades angle of pitch. Central control unit 5030 may comprise a processor/controller, memory and or storage unit(s), I/O interface units and optionally wireless communication transceiver (all are not shown and may be embodied as known in the art). Central control unit 5030 may have stored therein in the storage unit program(s) which when executed may receive, store and process data received from each of units 5022 and 5600, and to provide momentary control signals to control one or more of the motors' torque, RPM, thrust, and blade pitch. The executed programs may comprise lookup tables and/or mathematical functions that are made to provide control signals, in response to the received signals, so as to achieve one or more of the control goals, such as required total thrust, required combined moment, required RPM, required not-to-exceed noise level and the like.

The control system can be implemented as part of the motor controller, or may be separately embodied by an external controller/computer which may be part of an external system. The sensors can be located / embodied internally (integral part of the motor or motor controller) or externally (installed by the system integrator).

It would be appreciated that a selected combination of structure design and operational parameters may provide several performance envelopes, as may be needed. For example, the selection of the available thrust of the propeller and of the respective fan may provide high level of redundancy between the two, so that sudden loss of one of them may cause no more than substantially half of the total available thrust.

Such a flight-envelope-point optimization can be performed in three manners: *a-priori* analysis or testing; real time optimization; or any combination of the above.

*A priori* analysis can be performed using analytic tools (such as CFD tools) and/or mathematical models and/or actual testing such as wind tunnel experiment or noise measurement. Once optimized, the relevant optimization data (such as required RPM for each thrust generator) can be stored in a form of a look-up-tables, to be referred to during actual flight.

A real time optimization can be performed by measuring the optimized parameter in real time, while slightly changing the adjustable EPDF parameters in order to identify the trend of the optimized parameter. For example, measuring the overall thrust per power, while changing the RPM ratio of the fan and outer propeller. If the RPM ratio change increases the thrust per power, this positive trend can be further adjusted. If the RPM ratio change decreases the thrust per power, the adjustment shall be made in the opposite direction.

In order to allow the real time optimization, the optimized parameter needs to be measured, along with, at minimum, the overall thrust of the EDPF, since per flight envelope the air vehicle requires a certain amount of thrust which has to be kept constant. Such thrust measurement can be performed by a strain gauge, load cell, mechanical spring, hydraulic cylinder or any other force/strain measuring device, which will be installed at the EPDF connection point to the airframe.

Such real time optimization can be performed in order to eliminate the EPDF torque which is transferred to the airframe, by setting a counter-rotating fan and propeller parameters in such way that the fan-driving-motor 500 generates the same amount of torque as the propeller-driving-motor 600, but in opposite directions, so the overall torque is close to zero.

Such real time optimization can be performed in order to eliminate the EPDF gyroscopic precession effects, which is transferred to the airframe, by setting a counter-rotating fan and propeller parameters in such way that the fan-driving-motor generates the same amount angular momentum as the propeller-driving-motor, but in opposite directions, so the overall gyroscopic precession effect is close to zero.

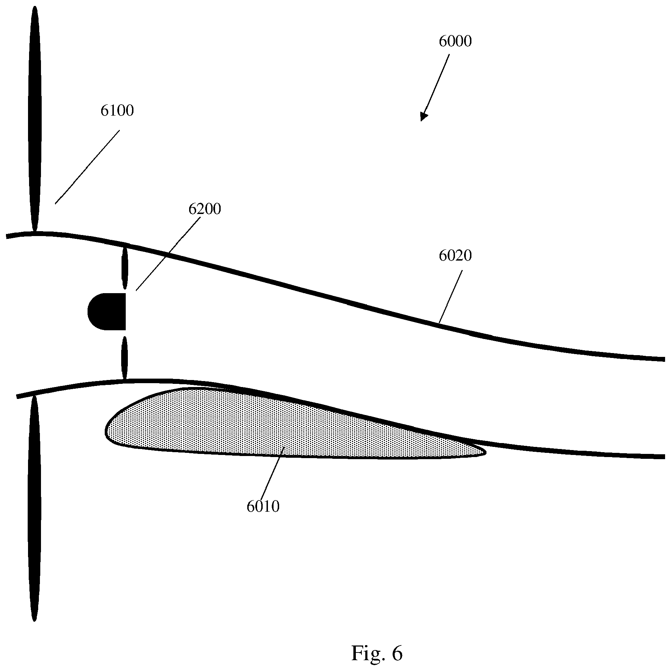

Reference is made now to **Fig. 6****,** which is a schematic cross section view of an optional design of EPDF 6000 with duct 6020 designed to consider Airborne structure constraints, according to some embodiments of the present invention. Duct 6020 may be formed so as to smoothly direct the airflow through it over the upper side of wing 6010. Propeller 6100 and fan 6200 are disposed externally and internally to the duct, respectively, in line with the description above. Such design considers existing structural constraints without losing the benefits of the EPDF discussed above.

The list of in-flight optimized parameters may include the EPDF required power (for performance optimization), motors temperature (for cooling effect optimization), and noise (either cabin noise or outer noise).

Such measurements can be performed by a voltage and current probes (for power), thermometers of any kind (for motors temperature) and microphones (for noise), *mutatis mutandis.*

A-priori and real time optimization can be also combined. For example, using an *a-priori* look-up-table to set the initial state of the, said, RPM and then using the real time optimization to further optimize and improve the performance even more, while overcoming inaccuracies in the a-priori data which may be caused by some changes in the flight conditions (for example, outer temperature, air density, etc.)

## Claims

1. A method of controlling a propulsion system (10) for a vehicle, comprising:
said propulsion system comprising:
at least one ducted fan (200) mounted within a duct (700); and
at least one propeller (100) mounted on an outer perimeter of a respective duct (700) of
the at least one ducted fan (200),
said method comprising:
controlling a first electric motor (120) to drive said at least one propeller (100); and
controlling a second electric motor (220) to drive said at least one ducted fan (200) independently of said first electric motor (120).

2. The method of controlling a propulsion system (10) of claim 1, wherein said controlling said first electric motor (100) comprises adjusting at least one parameter of said at least one propeller (100), and said controlling said second electric motor (220) comprises adjusting at least one parameter of said at least one ducted fan (200), and wherein said parameters include rotation speed, rotation direction, thrust and blade pitch angles.

3. The method of controlling a propulsion system (10) of claim 2, wherein said parameters are adjusted during real time operation of said vehicle.

4. The method of controlling a propulsion system (10) of any one of claim 2 and claim 3, wherein said parameters are adjusted based on on-going performance measurement of the propulsion system (10).

5. The method of controlling a propulsion system (10) of any one of claims 2-4, wherein said parameters are adjusted according to a preloaded performance chart.

6. The method of controlling a propulsion system (10) of any one of claims 1-5, wherein a ducted fan RPM, a propeller RPM, and a propeller blades pitch angle are independently controlled to achieve optimized one or more of: maximum efficiency of said propulsion system (10), reduction of the noise of said propulsion system (10) and minimization of combined torque of said propulsion system (10) on said vehicle.

7. The method of controlling a propulsion system (10) of any one of claims 1-6, wherein said first electric motor (120) and said second electric motor (220) are independently controlled to create destructive interference of sound waves generated from said at least one ducted fan (200) and sound waves generated from said at least one propeller (100).

8. The method of controlling a propulsion system (10) of any one of claims 1-7, wherein the at least one propeller (100) and the at least one ducted fan (200) are counter-rotating, and wherein said first electric motor (120) and said second electric motor (220) are independently controlled to generate substantially equal torque in opposite directions.

9. The method of controlling a propulsion system (10) of any one of claims 1-8, wherein the at least one propeller (100) and the at least one ducted fan (200) are counter-rotating, and wherein said first electric motor (120) and said second electric motor (220) are independently controlled to generate substantially equal angular momentum in opposite directions.

10. The method of controlling a propulsion system (10) of any one of claims 1-9, wherein said second electric motor (220) is controlled to maximize cooling of said first electric motor (120).

11. The method of controlling a propulsion system (10) of any one of claims 1-10, wherein said at least one propeller (100) and said at least one ducted fan (200) rotate around a common rotation axis.
